# EUROPEAN PATENT SPECIFICATION

(11) **EP 2 426 763 B1**
(45) Date of publication and mention of the grant of the patent: **11.01.2017**
(21) Application number: 10769817.7
(22) Date of filing: 22.04.2010
(51) Int. Cl.: H01M 4/90, H01M 4/96, H01M 8/10

(54) **ANODE-SIDE CATALYST COMPOSITION FOR FUEL CELL AND MEMBRANE ELECTRODE ASSEMBLY (MEA) FOR SOLID POLYMER-TYPE FUEL CELL**
ANODENSEITIGE KATALYSATORZUSAMMENSETZUNG FÜR EINE BRENNSTOFFZELLE UND MEMBRANELEKTRODENANORDNUNG (MEA) FÜR EINE FESTPOLYMERBRENNSTOFFZELLE
COMPOSITION DE CATALYSEUR CÔTÉ ANODE POUR PILE À COMBUSTIBLE ET ENSEMBLE MEMBRANE-ÉLECTRODE (MEA) POUR PILE À COMBUSTIBLE DE TYPE POLYMÈRE SOLIDE

(30) Priority: 27.04.2009 JP 2009108331
(43) Date of publication of application: 07.03.2012
(73) Proprietor: W.L. Gore & Associates, Co., Ltd., Tokyo 108-0075 (JP)
(72) Inventor: MARUYAMA, Masashi, Tokyo 1080075 (JP); SAKAMOTO, Atsushi, Tokyo 1080075 (JP); KOSAKA, Takuya, Tokyo 1080075 (JP); KAWAGUCHI, Tomoyuki, Tokyo 1080075 (JP)
(74) Representative: Klunker . Schmitt-Nilson . Hirsch
(86) International application number: PCT/JP2010/057638
(87) International publication number: WO 2010/126119

(56) References cited:
- WO-A1-2005/049199
- JP-A- 2007 115 668
- JP-A- 2007 222 732
- JP-A- 2007 265 734
- JP-A- 2008 036 539
- JP-A- 2008 293 698
- MARSHALL ET AL: "Performance of a PEM water electrolysis cell using IrxRuyTazO2 electrocatalysts for the oxygen evolution electrode", INTERNATIONAL JOURNAL OF HYDROGEN ENERGY, ELSEVIER SCIENCE PUBLISHERS B.V., BARKING, GB, vol. 32, no. 13, 28 August 2007 (2007-08-28), pages 2320-2324, XP022216618, ISSN: 0360-3199, DOI: 10.1016/J.IJHYDENE.2007.02.013
- LABOU D ET AL: "Performance of laboratory polymer electrolyte membrane hydrogen generator with sputtered iridium oxide anode", JOURNAL OF POWER SOURCES, ELSEVIER SA, CH, vol. 185, no. 2, 1 December 2008 (2008-12-01), pages 1073-1078, XP025672743, ISSN: 0378-7753, DOI: 10.1016/J.JPOWSOUR.2008.08.013 [retrieved on 2008-08-15]

## Description

### TECHNICAL FIELD

The present invention relates to an anode-side catalyst composition for fuel cells and a membrane electrode assembly (MEA) for polymer electrolyte fuel cells.

### BACKGROUND ART

In recent years, fuel cells are attracting attention as high-efficiency energy conversion devices. Fuel cells are roughly classified by the type of electrolyte used in a low-temperature operation fuel cell, such as an alkali, polymer electrolyte and phosphoric acid, and a high-temperature operation fuel cell, such as molten carbonate and solid oxide. Among these, a polymer electrolyte fuel cell (PEFC) using a polymer electrolyte membrane having ion conductivity is becoming an attractive power source in stationary, vehicular and portable applications, because high output density can be obtained with a compact structure and, for example, no use of a liquid as the electrolyte and the ability to used at low temperatures enable the realization of a simple system.

The basic principle of a polymer electrolyte fuel cell is that a gas diffusion electrode layer is disposed on both sides of a polymer electrolyte membrane, the anode side and the cathode side are exposed to a fuel gas (e.g., hydrogen) and an oxidant gas (e.g., air), respectively, water is synthesized by a chemical reaction through the polymer electrolyte membrane, and the reaction energy produced is electrically extracted.

In the case of supplying hydrogen and oxygen as active materials to the anode and the cathode, respectively, a reaction of (1) occurs on the anode catalyst, a reaction of (2) occurs on the cathode catalyst, and electric power is generated due to the potential difference therebetween.

H₂ → 2H⁺ + 2e⁻ (E₀ = 0 V) (1)

O₂ + 4H⁺ + 4e⁻ → 2H₂O (E₀ = 1.23 V) (2)

In this respect, fuel cells are being used due efficient power generation characteristics, and durability in a stationary operation. However, for example, use of platinum for the electrode catalyst makes the system expensive or irreversible deterioration is accelerated in a non-stationary operation such as fuel shortage or start/stop, which need to be solved for the practical application of a fuel cell system.

The mechanism of anode deterioration that is generated when the fuel (e.g., hydrogen) supplied during the operation of a fuel cell runs low is described below. When the fuel runs low, in order to supplement H⁺ required for the cell reaction, either one or both of a reaction (3) of generating H⁺ by the electrolysis of water and a reaction (4) of generating H⁺ by the corrosion of anode catalyst support carbon take place, and deterioration of the anode occurs.

H₂O → 1/2O₂ + 2H⁺ + 2e⁻ (3)

1/2C + H₂O → 1/2CO₂ + 2H⁺ + 2e⁻ (4)

Deterioration of the anode by the reaction (4) is serious and has a risk of instantaneously disabling the fuel cell. In particular, when the reaction efficiency of water electrolysis is low (the reaction overvoltage is high), the reaction (4) of producing H⁺ by the corrosion of catalyst support carbon but not the water electrolysis reaction (3) may occur, and the anode deterioration becomes more serious.

How cathode corrosion occurs in the start/stop is described below. In the stationary state of a fuel cell, the anode side is in a hydrogen atmosphere and the cathode side is in an air atmosphere, but the start/stop generally causes supply of air to the anode side to stop the power generation. Both the anode and the cathode are usually in an air atmosphere during stoppage of the fuel cell, and power generation (start-up) is started by supplying hydrogen to the anode that is in an air atmosphere. When hydrogen is supplied to the anode at the start-up, the anode side may enter a state of hydrogen and air being mixed.

H₂ → 2H⁺ + 2e⁻ (1)

O₂+ 4H⁺ + 4e⁻ → 2H₂O (2)

1/2C + H₂O → 1/2CO₂ + 2H⁺ + 2e⁻ (4)

At the start-up, in the anode near the anode gas inlet, hydrogen is supplied and a hydrogen oxidation reaction (1) occurs, whereas in the cathode as the counter electrode at the position opposing the vicinity of the anode gas inlet, air (oxygen) is already present and oxygen reduction reaction (2) occurs, thus allowing reaction of a normal fuel cell to be generated in the upstream parts of the anode and the cathode. On the other hand, in the anode near the anode gas outlet, air (oxygen) supplied at the time of stoppage remains but hydrogen is not yet sufficiently supplied and therefore, oxygen reduction reaction (2) occurs. In the cathode as a counter electrode at the position opposing the vicinity of anode gas outlet, oxidation reaction occurs correspondingly but since hydrogen as a material to be oxidized is not present, corrosion reaction (4) of oxidizing carbon present occurs. That is, corrosion reaction of carbon is generated in the cathode at the position opposing the downstream part of the anode. It is reported that this phenomenon is one of causes of cathode deterioration at the start/stop time (Patent Document 1).

As to the measure for preventing deterioration at the fuel shortage, in Patent Document 2, a technique of mixing a water electrolysis catalyst such as iridium oxide with the electrode catalyst so as to prevent the anode catalyst support from corroding at the hydrogen deficiency is disclosed. According to this technique, it durability against cell reversal of a fuel cell can be more strengthened.

Also, Patent Document 3 discloses a technique relating to a fuel electrode (anode) of a polymer solid electrolyte fuel cell, wherein the fuel electrode of a polymer solid electrolyte fuel cell is composed of at least one reaction layer lying in contact with a polymer solid electrolyte membrane and causes a fuel cell reaction and at least one water electrolysis layer capable of electrolyzing water in the fuel electrode (anode). According to this technique, a fuel cell which is a polymer solid electrolyte fuel cell does not readily cause reduction in the electrode characteristics even when the fuel runs low can be provided.

Also, as a measure for preventing deterioration at the start/stop, cases of using highly crystallized carbon or platinum black for the carbon used in the cathode catalyst have been reported (Patent Documents 4 and 5).

### RELATED ART

### Patent Document

Patent Document 1: U.S. Patent No. 6,855,453
Patent Document 2: Tokuhyo (National Publication of Translated Version) No. 2003-508877
Patent Document 3: Kokai (Japanese Unexamined Patent Publication) No. 2004-22503
Patent Document 4: Kokai No. 2001-357857
Patent Document 5: Kokai No. 2005-270687

WO 2005/049199 (Umicore AG & CO KG) relates to iridium oxide based catalysts for use as anode catalysts in PEM water electrolysis. The composite catalyst material comprise iridium oxide and optionally ruthenium oxide in combination with a high surface area inorganic oxide.

Marshall et al (International Journal of Hydrogen Energy, 32 (2007) 2320-2324) describe a PEM water electrolysis cell which uses an IrxRuyTazO2 anode electrocatalyst.

Labou et al (Journal of Power Sources, 185 (2008) 1073-1078) describe an iridum/titanium film deposited directly onto a carbon substrate via magnetron sputtering to provide an electrode for the oxygen evolution reaction in a PEM hydrogen generator.

### SUMMARY OF THE INVENTION

### Means to Solve the Problems

For practical application of a fuel cell, it is imperative to satisfy both prevention of a fuel cell from deterioration due to a non-stationary operation (start/stop, fuel shortage) and cost reduction, for example, by decreasing the amount of platinum catalyst. Solving each problem is insufficient for the practical application.

Related arts for preventing a fuel cell from deterioration due to a non-stationary operation (start/stop, fuel shorted) in a fuel cell are known, but all related arts are premised on use of a platinum (Pt) catalyst. Platinum (Pt) accounts for a majority of the fuel cell cost and therefore, a problem remains in view of cost reduction for the practical application of a fuel cell.

As a countermeasure against fuel shortage, use of a water electrolysis catalyst is proposed in related arts, but since such a catalyst readily elutes, configuration of a fuel cell only by a water electrolysis catalyst is difficult and is not practically realized and for this reason, this catalyst is used by adding it to a platinum (Pt) catalyst.

Also, a countermeasure against start/stop is proposed in related arts, but further improvement are demanded. More specifically, there is a tradeoff in that an increase in the start/stop durability leads to a decrease in the initial output, and therefore, in order to satisfy the practical output and the start/stop durability, a technique of increasing the loading of cathode platinum catalyst to obtain practical output by sacrificing the cost must be employed. As a result, it is difficult to satisfy the high start/stop durability and the low cost.

Since the countermeasures against start/stop and fuel shortage proposed in related arts are not sufficient, the fuel cell is now protected by a system. The gas pressure, potential and the like are controlled while minutely monitoring them by various sensors so as to avoid reaching a deterioration mode coming from start/stop or fuel shortage. Because of the cost of such auxiliaries and the complicated control, the approach from the system side makes it difficult to reduce the cost of a fuel cell.

A technique capable of solving these problems as well as improving the deterioration of a fuel cell due to a non-stationary operation (start/stop, fuel shortage) and ensuing a low cost is being demanded.

### MEANS TO SOLVE THE PROBLEMS

The problem is solved by the anode-side catalyst composition claimed in claim 1 and the membrane electrode assembly claimed in claim 6. Embodiments of the invention are claimed in the respective dependent claims.

### EFFECTS OF THE INVENTION

According to the present invention, a low-cost and high-performance fuel cell capable of suppressing fuel cell deterioration due to a non-stationary operation (start/stop, fuel shortage), with the anode using absolutely no platinum (Pt) that has heretofore accounted for a majority of the fuel cell cost, can be obtained.

According to the present invention, even when hydrogen supplied runs low during operation of a fuel cell, the elution problem of catalyst is overcome and therefore, the anode deterioration can be prevented without using a platinum catalyst.

According to the present invention, anode and cathode deteriorations at the start/stop time of a fuel call can be reduced. Thanks to this effect, durability of the cathode can be greatly enhanced and the platinum catalyst loading in the cathode can be decreased, so that cost reduction of the fuel cell can be realized.

According to the present invention, the main deterioration cause of a fuel cell, such as fuel shortage (polarity inversion) or start/stop, can be fundamentally solved. Therefore, the portion conventionally protected by a system can be reduced and in turn, the cost of the entire system can be reduced.

### BRIEF DESCRIPTION OF THE DRAWINGS

Fig. 1 is a view showing the X-ray diffraction (XRD) patterns of Carbon-Supported Iridium Catalysts A1 to A4 produced by performing a heat treatment in a reducing atmosphere.
Fig. 2 is a view showing XRD patterns of Carbon-Supported Iridium Catalysts B1 to B3 produced by heat-treating Catalyst A1 in an oxidizing atmosphere, and Catalyst A1.
Fig. 3 is a view showing current density vs. reversible hydrogen electrode potential determined by performing cyclic voltammetry using the anode as a working electrode.

### MODE FOR CARRYING OUT THE INVENTION

The catalyst composition of the present invention is an anode-side catalyst composition for fuel cells, comprising a catalyst obtained by supporting a catalyst particle on an electrically conductive material and an ion exchange resin, wherein the catalyst particle is composed of a metal or a partial metal oxide, said metal being selected from the group consisting of iridium, ruthenium, rhenium, palladium and rhodium, said catalyst particle containing said metal or partial metal oxide having an average crystallite size of from 2 to 20 nm.

The fuel cell has a basic structure where a polymer electrolyte membrane and catalyst layers joined to both sides thereof are arranged. One catalyst layer is the anode capable of reacting with a fuel (e.g., hydrogen), and another catalyst layer is the cathode capable of reacting with an oxidant gas (e.g., oxygen). In the case of supplying hydrogen and oxygen as active materials to respective catalyst layers, a reaction of [1] occurs on the anode catalyst, a reaction of [2] occurs on the cathode catalyst, and an electric power is generated due to the potential difference therebetween.

H₂ → 2H⁺ + 2e⁻ (E₀ = 0 V) [1]

O₂ + 4H⁺ + 4e⁻ → 2H₂O (E₀ = 1.23 V) [2]

The catalyst particle contained in the catalyst composition of the present invention has a hydrogen oxidation ability, that is, an ability of allowing the reaction of [1] to proceed. Thanks to this ability, the catalyst composition containing the catalyst particle acts as an anode-side catalyst composition for fuel cells.

The catalyst particle has a water electrolysis overvoltage lower than that of platinum. The water electrolysis overvoltage means a potential difference necessary to allow the following reaction of [3] to proceed. That is, when this catalyst particle is used, the reaction of [3] proceeds with a lower potential difference than in the case of using platinum as the catalyst.

H₂O → 1/2O₂ + 2H⁺ + 2e⁻ [3]

As a result, the anode deterioration can be suppressed.

When the fuel runs low in the anode, the reaction of [1] does not occur and in order to supplement H⁺ required for the cell reaction, either one or both of a reaction (3) of generating H⁺ by the electrolysis of water and a reaction (4) of generating H⁺ by the corrosion of anode catalyst support carbon take place.

1/2C + H₂O → 1/2CO₂ + 2H⁺ + 2e⁻ [4]

In the case where the reaction efficiency of the water electrolysis reaction [3] is low (the reaction overvoltage is high), the reaction [4] of producing H⁺ by the corrosion of catalyst support carbon but not the water electrolysis reaction [3] is liable to occur, and the anode deterioration becomes more serious.

In the present invention, a catalyst whose oxygen generation overvoltage during water electrolysis is lower than that of platinum is used, so that a rise in the anode potential at the fuel shortage can be suppressed. More specifically, the water electrolysis reaction [3] occurring at the fuel shortage smoothly proceeds in the anode and this makes it difficult for the reaction [4] of producing H⁺ by the corrosion of the anode (the catalyst support carbon contained therein) to take place, as a result, the anode deterioration can be suppressed.

The catalyst particle has an oxygen reduction ability lower than that of platinum. The oxygen reduction ability is an ability of promoting the reaction of [2] below.

O₂ + 4H⁺ + 4e⁻ → 2H₂O [2]

The anode catalyst for use in the present invention is lower in the oxygen reduction ability than platinum, whereby the deterioration of a fuel cell at the start/stop time can be reduced.

The deterioration mechanism of a fuel cell at the start/stop time is such that an oxygen reduction reaction [2] is caused in the anode and a corresponding oxidation reaction is caused in the cathode as the counter electrode but since a fuel (e.g., hydrogen) to be oxidized is not supplied to the cathode, a corrosion reaction [4] of oxidizing carbon that is present as an electrode material takes place.

1/2C + H₂O → 1/2CO₂ + 2H⁺ + 2e⁻ [4]

In the present invention, the oxygen reduction reaction [2] in the anode is suppressed by using a catalyst with low oxygen reduction activity for the anode, and this makes it possible to inhibit the induction of the cathode corrosion reaction [4] at the start/stop time and reduce the fuel cell deterioration.

The catalyst particle of the present invention is composed of a metal or a partial metal oxide. The partial metal oxide as used herein means, for example, a catalyst particle where the core is a metal and the surface portion is a metal oxide, or a catalyst particle where the core is a metal oxide and the surface portion is a metal.

The metal element working out to the anode-side catalyst composition of the present invention is selected from the group consisting of iridium, ruthenium, rhenium, palladium and rhodium. These metal elements are lower in both the oxygen reduction ability and the water electrolysis overvoltage than platinum and have a hydrogen oxidation ability. Above all, iridium is preferred because the water electrolysis overvoltage is lowest and the hydrogen oxidation ability is high. Platinum is not indispensable in the anode-side catalyst composition of the present invention and therefore, a low-cost fuel cell is obtained.

In the case where the catalyst particle contains the metal above, the average crystallite size of the metal is from 2 to 20 nm. If the average crystallite size is less than 2 nm, the metal contained in the catalyst particle elutes in a fairly large amount and this incurs various problems. The metal contained in the catalyst particle sometimes elutes resulting from fluctuation in the anode potential caused due to a start/stop operation of the fuel cell and the eluted metal causes a problem of reducing the proton conductivity of the electrolyte membrane. Furthermore, when the eluted metal is transferred even to the cathode, the oxygen reduction reaction of the cathode is inhibited to lower the power generation voltage. Such a problem of metal elution is considered to be affected by the particle size or electron state of the metal. The present inventors have found that the elution of metal contained in the catalyst particle can be greatly reduced by setting the average crystallite size to 2 nm or more. On the other hand, if the average crystallite size of the metal contained in the catalyst particle exceeds 20 nm, the effective specific surface area of the metal is decreased and the water electrolysis ability is lowered (the reaction efficiency of [3] is lowered), as a result, the durability to polarity inversion at the hydrogen-deficient operation is reduced. The catalyst loading needs to be increased to compensate for this reduction in durability, and a low-cost fuel cell cannot be obtained.

The metal is coarsened by heat-treating the metal at 200 to 800°C in a reducing atmosphere, and the average crystallite size of the metal can be thereby adjusted.

The electric charge quantity (Q_{H}) in the hydrogen adsorption region per unit mass of the metal is preferably from 15.0 to 65.0 C/mg (metal). In the case of the invention where the catalyst particle is a fine particle, the electric charge quantity (Q_{H}) in the hydrogen adsorption region per unit mass of the catalyst is proportional to the surface area of the catalyst. That is, the electric charge quantity (Q_{H}) is correlated with the average crystallite size of the catalyst metal. More specifically, it is considered that as the average crystallite size is smaller, the catalyst surface area becomes larger and the electric charge quantity per mass of the metal is increased. Comparing with the average crystallite size based on XRD, when the average crystallite size of the catalyst composition is from 2 to 20 nm, the electric charge quantity (Q_{H}) in the hydrogen adsorption region per unit mass of the metal corresponds to the range of 15.0 to 65.0 C/mg (metal).

In the case where the catalyst particle contains the partial metal oxide, the mass ratio of the metal : the metal oxide is preferably from 1:10 to 10:1. If the metal content by mass exceeds this range (if the content by mass of the oxide is less than the range above), oxidation of the metal or coarsening of the metal proceeds insufficiently and elution of the metal component cannot be reduced, whereas if the metal content by mass is less than the range above (if the content by mass of the oxide exceeds the range), oxidation excessively proceeds and the hydrogen oxidation activity of the catalyst is reduced.

The X-ray photoelectric spectrometry (XPS) is an experimental method of obtaining information about the electron structure, atomic arrangement, magnetic property and she like of a substance by measuring the kinetic energy distribution, angle distribution, spin and the like of a photoelectron emitted when X-ray monochromatic light such as AlKα and MgKα rays is irradiated on the substance. By this method, a core electron can be released and moreover, since the ionization energy varies according to the chemical environment (chemical shift), an elemental analysis and a state analysis can be performed. When the spectrum of the catalyst particle for use in the present invention is measured by an X-ray photoelectron spectrometer, the peak at Ir4f7/2 in the XPS spectrum is included between 60.8 and 61.4 (eV). The peak at Ir4f7/2 is correlated with the oxidation number of Ir. In the partial metal oxide, the mass ratio of the metal : the metal oxide is from 1:10 to 10:1, and this corresponds to the fact that the peak at Ir4f7/2 is included between 60.8 and 61.4 (eV).

The partial metal oxide in such a mass ratio can be obtained by heat-treating the metal at 100 to 300°C in an oxidizing atmosphere. By this heat treatment, coarsening of the metal and oxidation of the metal simultaneously proceed, whereby the amount of the metal component eluted can be reduced. Furthermore, thanks to the heat treatment allowed to proceed in such an oxidizing atmosphere, the oxygen reduction activity as a catalyst can be greatly reduced and the cathode deterioration at the start/stop time can be more successively suppressed. As the oxidation of the metal proceeds, the elution of the metal component is more reduced, but if the oxidation excessively proceeds, the hydrogen oxidation activity is disadvantageously lowered. Accordingly, in the case of the partial metal oxide the mass ratio of the metal : the metal oxide is preferably in the range above.

In view of corrosion resistance at the fuel shortage, the support carrying the catalyst particle is preferably carbon with high graphitization degree, but the support is not limited to carbon and, for example, a high-durability oxide support such as titanium oxide and tin oxide is also applicable. In the case of applying an oxide support insufficient in the electrical conductivity, an electrically conductive material is preferably used in combination to ensure the electrical conductivity.

Also, in order to reduce the amount of Ir and the like eluted, it is preferred to reduce impurities in the catalyst. The impurity that becomes a problem in particular includes an anion such as chloride ion.

The ion exchange resin in the catalyst composition is a material supporting the catalyst and working out to a binder forming the catalyst layer and has a role of forming a pathway to transfer an ion and the like produced. This ion exchange resin (polymer electrolyte membrane) is not particularly limited as long as it has high proton (H⁺) conductivity and is electron-insulating and gas-impermeable, and a known polymer electrolyte membrane may be used. Representative examples thereof include a resin having a fluorine-containing polymer framework and containing a group such as sulfonic acid group, carboxylic acid group, phosphoric acid group and phosphonic acid group. The thickness of the polymer electrolyte membrane greatly affects the resistance and therefore, is preferably smaller as long as the electron-insulating property and gas impermeability are not impaired. Specifically, the thickness is set in the range of 0.1 to 100 µm, preferably from 0.1 to 30 µm. The material of the polymer electrolyte membrane for use in the present invention is not limited to a wholly fluorine-based polymer compound but may be a mixture with a hydrocarbon-based polymer compound or an inorganic polymer compound, or a partially fluorine-based polymer compound containing both a C-H bond and a C-F bond in the polymer chain. Specific examples of the wholly fluorine-based polymer electrolyte membrane include Nafion (registered trademark) membrane (produced by DuPont), Aciplex (registered trademark) membrane (produced by Asahi Kasei Corp.) and Flemion (registered trademark) membrane (produced by Asahi Glass Co., Ltd.), which are a perfluoropolymer having a sulfonic acid group in the side chain. Specific examples of the hydrocarbon-based polymer electrolyte include a polyamide, a polyacetal, a polyethylene, a polypropylenes, an acrylic resin, a polyester, a polysulfone, a polyether, and a derivative thereof (an aliphatic hydrocarbon-based polymer electrolytes), each having introduced thereinto an electrolytic group such as sulfonic acid group; a polystyrene having introduced thereinto an electrolytic group such as sulfonic acid group; a polyamide, a polyamideimide, a polyimide, a polyester, a polysulfone, a polyetherimide, polyethersulfone, a polycarbonate, and a derivative thereof (a partially aromatic hydrocarbon-based polymer electrolyte), each having an aromatic ring; and a polyether ether ketone, a polyether ketone, a polyether sulfone, a polycarbonate, a polyamide, a polyamideimide, a polyester, a polyphenylene sulfide, and a derivative thereof (a wholly aromatic hydrocarbon-based polymer electrolyte), each having introduced thereinto an electrolytic group such as sulfonic acid group. The inorganic polymer compound is preferably a siloxane-based or silane-based, particularly alkylsiloxane-based, organic silicon polymer compound, and specific examples thereof include polydimethylsiloxane and γ-glycidoxypropyltrimethoxysilane. Specific examples of the partially fluorine-based polymer electrolyte include a polystyrene-graft-ethylene tetrafluoroethylene copolymer, a polystyrene-graft-polytetrafluoroethylene, and a derivative thereof, each having introduced thereinto an electrolytic group such as sulfonic acid group.

The electrically conductive material is suitably a carbon-based particle such as carbon black, activated carbon and graphite, and in particular, a fine powdered particle is preferred. The particle is typically a carbon black particle with high graphitization degree having a BET surface area of 50 m²/g or more. The BET surface area of the carbon black particle is preferably 300 m²/g or less. If the BET surface area of the carbon black particle exceeds 300 m²/g, a fine particle of the catalyst particle (noble metal) can be carried, and the catalyst particle diameter is reduced to a fine particle size, which may cause elution of the catalyst particle readily occurs and a problem that the anode is increased in the oxygen reduction reaction (ORR) activity. When the BET surface area of the carbon black particle is 300 m²/g or less, a carbon black having a small surface area and high graphitization/crystallization degree accounts for a large proportion and therefore, durability at the polarity inversion (at the fuel shortage) is enhanced. If the BET surface area of the carbon black particle is less than 50 m²/g, uniform support of the catalyst particle becomes difficult due to its excessively small surface area.

In order to allow a fuel such as hydrogen in the anode side and an oxidant gas such as oxygen and air in the cathode side to contact with the catalyst as many occasions as possible, the catalyst layer is preferably porous. Also, the amount of the catalyst (in terms of the mass of metal element) contained in the catalyst layer may be generally from 0.01 to 5 mg/cm². In particular, the anode loading is suitably from 0.01 to 0.2 mg/cm². In view of the cost and durability at the start/stop time, the anode loading is preferably small and therefore, the anode loading is preferably 0.2 mg/cm² or less. However, if the anode loading is too small, the power generation performance is reduced and therefore, the anode loading is preferably 0.01 mg/cm² or more. The cathode loading is preferably from 0.1 to 0.6 mg/cm². As the cathode loading is larger, both the initial activity and the durability are enhanced, but in view of the cost, the cathode loading is preferably 0.6 mg/cm² or less. If the cathode loading is too small, the initial activity/durability are greatly reduced and therefore, the cathode loading is preferably 0.1 mg/cm² or less. The thickness of the catalyst layer may be generally from 1 to 200 µm, but in particular, the thickness is preferably from 1 to 100 µm for the anode and preferably from 3 to 30 µm for the cathode.

The catalyst layer in the cathode of the fuel cell is not particularly limited as long as it contains a catalyst particle and an ion exchange resin, and a conventionally known catalyst layer can be used. The catalyst is usually composed of an electrically conductive material having supported thereon a catalyst particle. The catalyst particle may be sufficient if it exerts a catalytic action in the oxidation reaction of hydrogen or in the reduction reaction of oxygen, and in addition to platinum (Pt) and other noble metals, iron, chromium, nickel, cobalt or the like, or an alloy thereof may be used. By using the anode-side catalyst composition of the present invention, the cathode deterioration and in turn, the elution of the cathode catalyst associated with the cathode deterioration are reduced. Accordingly, the cathode catalyst need not be supported in excess, and this leads to the cost reduction.

Generally, an assembly integrated by joining an anode catalyst layer to one surface of a polymer electrolyte membrane and joining a cathode catalyst layer to the opposite surface is called a membrane electrode assembly (MEA). The present invention is also related to a membrane electrode assembly (MEA) for polymer electrolyte fuel cells, wherein the anode catalyst layer of MEA contains the above-described catalyst composition. This MEA has characteristics based on the catalyst composition contained in the anode catalyst layer, i.e., advantages that the anode deterioration occurring at the hydrogen deficiency can be prevented, the anode and cathode deteriorations at the start/stop of a fuel cell are reduced, and the cost is low.

In MEA, a gas diffusion layer can be generally further provided on the side opposite the polymer electrolyte membrane of the anode catalyst layer and/or the cathode catalyst layer. The gas diffusion layer is a sheet material having electrical conductivity and gas permeability. Typical examples thereof include a material obtained by applying a water repellency treatment to a gas-permeable electrically conductive base material such as carbon paper, carbon woven fabric, carbon nonwoven fabric and carbon felt. Also, a porous sheet obtained from a carbon-based particle and a fluorine-based resin can be used. For example, a porous sheet obtained by forming carbon black into a sheet by using polytetrafluoroethylene as a binder can be used.

In the MEA of the present invention, the Pt loading in the cathode may be 0.2 mg/cm² or less. By custom, a Pt loading of 0.4 mg/cm² or more is required in the cathode in view of durability. By using the anode-side catalyst composition of the present invention, the cathode deterioration is reduced, so that even when the Pt loading in the cathode is 0.2 mg/cm² or less, practical use as MEA becomes possible.

### EXAMPLES

The present invention is described in greater detail below by referring to Examples, but the present invention is not limited to these Examples.

### [Production of Catalyst]

For the cell evaluation, a catalyst comprising carbon black having supported thereon iridium or an oxide thereof was prepared. A Series where the heat treatment was performed in a reducing atmosphere, and B series where the heat treatment was performed in an oxidizing atmosphere, were prepared. Also, R series based on a commercial product were prepared. The detailed production procedure of the catalyst used for the cell evaluation is described below.

### (Production of Catalyst Heat-Treated in Reducing Atmosphere: A Series)

A solution obtained by dissolving chloroiridic (VI) acid hydrate containing 0.6 g of Ir in 200 ml of n-butanol was prepared. Separately, a liquid dispersion obtained by thoroughly dispersing 1.4 g of carbon black (Ketjen Black EC, trade name, produced by Ketjen Black International) in 300 mL of n-butanol was prepared. Subsequently, while stirring the carbon black liquid dispersion, the chloroiridic (VI) acid hydrate solution was added thereto to prepare a slurry. Ultrasonic waves were irradiated on the slurry for 10 minutes and then, the carbon black was impregnated with the chloroiridic (VI) acid hydrate while stirring at 80°C and dried with stirring at the same temperature for about 10 hours to obtain a black powder. The obtained powder was pulverized in an agate mortar and then heat-treated at a predetermined temperature in the range of 200 to 800°C for 2 hours under the flow of a mixed gas consisting of 10% of hydrogen gas and 90% of nitrogen gas to produce a carbon-supported iridium catalyst. The catalysts produced at a heat treatment temperature of 200°C, 400°C, 600°C and 800°C were designated as Catalyst A1, Catalyst A2, Catalyst A3 and Catalyst A4, respectively.

### (Production of Catalyst Heat-Treated in Oxidizing Atmosphere: B Series)

Catalysts of B series were produced by heat-treating the obtained Catalyst A1 in an oxidizing atmosphere. Catalyst A1 was heat-treated at a temperature of 100 to 300°C for 1 hour under the flow of a mixed gas consisting of 20% of oxygen gas and 80% of nitrogen gas to produce a carbon-supported iridium oxide catalyst. Incidentally, in performing the oxidation treatment at 300°C, the sample is burned due to heat generated in the course of raising the temperature and cannot be collected and therefore, after raising the temperature to 300°C with an oxygen gas concentration of 5%, the oxidation treatment was performed for 1 hour by increasing the oxygen gas concentration to 20%. The catalysts produced at a heat treatment temperature of 100°C, 200°C and 300°C were designated as Catalyst B1, Catalyst B2 and Catalyst B3, respectively. Catalyst B3 is not a catalyst according to the invention.

### (Production of Graphitized Carbon Support Catalyst Heat-Treated in Reducing Atmosphere: C Series)

A solution obtained by dissolving chloroiridic (VI) acid hydrate containing 0.6 g of Ir in 200 ml of n-butanol was prepared. Separately, a graphitized carbon black working out to a support was prepared by treating and thereby graphitizing carbon black (Ketjen Black EC, trade name, produced by Ketjen Black International) at 2,500°C. A liquid dispersion obtained by thoroughly dispersing 1.4 g of graphitized carbon black in 300 mL of n-butanol was prepared. Subsequently, while stirring the carbon black liquid dispersion, the chloroiridic (VI) acid hydrate solution was added thereto to prepare a slurry. Ultrasonic waves were irradiated on the slurry for 10 minutes and then, the carbon black was impregnated with the chloroiridic (VI) acid hydrate while stirring at 80°C and dried with stirring at the same temperature for about 10 hours to obtain a black powder. The obtained powder was pulverized in an agate mortar and then heat-treated at 200°C for 2 hours under the flow of a mixed gas consisting of 10% of hydrogen gas and 90% of nitrogen gas to produce a carbon-supported iridium catalyst. This was designated as Catalyst C1.

### (Production of Commercial Product-Based Catalyst: R Series)

As the commercial product-based catalyst, HP Iridium on Vulcan XC72 (produced by BASF Fuel Cell, Inc.) was employed (Catalyst R1). In this catalyst, the support is carbon black Vulcan XC72 and 40% iridium is supported thereon. Also, Catalyst R1 was heat-treated at 800°C for 2 hours under the flow of a mixed gas consisting of 10% of hydrogen gas and 90% of nitrogen gas to produce a carbon-supported iridium catalyst (Catalyst R2).

### (XRD Analysis of Catalyst)

The crystal structure, particle size and the like of the produced catalyst were investigated by XRD analysis. The XRD measurement was performed under the following continuous scan (wide angle measurement) and step scan (narrow angle measurement) conditions.
Apparatus: RINT2000 (Rigaku Corp.)
X-Ray: target: Cu, voltage: 40 kV, current: 80 mA
Continuous scan conditions: scan speed: 2°/min, sampling width: 0.02°
Step scan condition: measurement time: 5 s, step width: 0.02°

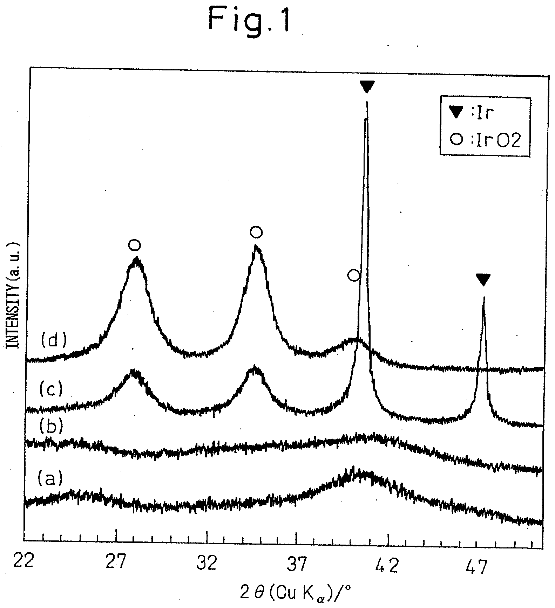

The X-ray diffraction (XRD) patterns of the A series catalysts prepared under a hydrogen and nitrogen mixed stream were measured, as a result, a diffraction pattern attributable to the fcc structure was obtained in all samples, confirming that an iridium fine particle is supported on the support carbon. The crystallite diameter of iridium was determined from the peak attributable to the (220) plane of iridium having a center in the vicinity of 69.1°. Fig. 1 is a view showing the results when X-ray diffraction (XRD) patterns of Catalyst A1 (a), Catalyst A2 (b), Catalyst A3 (c) and Catalyst A4 (d) were measured. It is seen that as the heat treatment temperature is higher, the half-value width of the diffraction peak becomes smaller and the crystallite size is increased. Crystallite sizes determined from the half-value width of respective peaks are shown in Table 1.

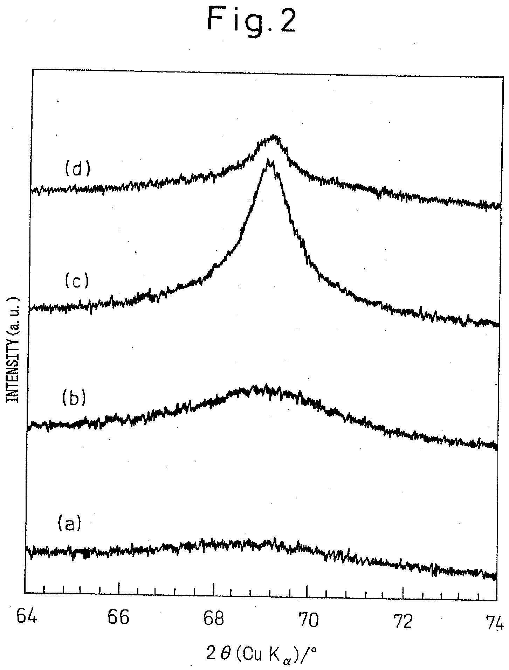

The X-ray diffraction (XRD) patterns of the B series catalysts prepared under an oxygen and nitrogen mixed stream were also measured. Fig. 2 is a view showing the results when XRD patterns of Catalyst A1 (a), Catalyst B1 (b), Catalyst B2 (c) and Catalyst B3 (d) were measured. In Fig. 2, in the case of Catalyst A1, a broad peak is observed over a region of about 32° to about 50°, and this indicates that a fine metal iridium phase is present. Also, Catalyst B1 shows a broader peak than Catalyst A1, but a new peak indicating the presence of iridium oxide was not observed. This suggests that in the oxidation treatment at 100°C, the iridium oxide phase is not grown to a size detectable by XRD, i.e., only the extreme surface of metal iridium fine particle is oxidized. In the case of Catalysts B2 and B3, a peak indicating the presence of iridium oxide phase is observed at 23.1° and 34.7°, revealing that the iridium oxide phase is grown by the oxidation treatment at 200°C or more. Furthermore, in the case of Catalyst B2, a steep peak indicating the presence of a big metal iridium particle of about 20 nm is observed at 40.6° and 47.2°. This is considered to result due to growth of the iridium particle occurred due to heat generation in the course of raising the temperature at the oxidation treatment. It is understood that the big particle is present in a state of having a metal iridium core by allowing only the surface to be oxidized and therefore, a steep peak of metal iridium appears. On the other hand, in the case of Catalyst B3 (not according to the invention), a peak indicating the presence of metal iridium cannot be confirmed, revealing that all particles detectable by XRD are present as an iridium oxide fine particle. The crystallite size of iridium calculated from the IrO₂ (101) peak having a center in the vicinity of 34.7° is shown in Table 1. The catalyst composition of the present invention has an average crystallite size of about 2.0 to 20 nm. With respect to Catalyst B1, since the peak intensity by XRD is small and the analysis is difficult, the average crystallite size is not calculated. However, from the fact that B1 is a catalyst obtained by subjecting A1 to oxidation treatment and the average crystal size of A1 is 2.0 nm, the average crystallite size of B1 is estimated to be 2.0 nm or more.

Table 1

**Table 1: Details of Catalyst Production**

| Catalyst Name | Atmosphere at Heat Treatment | Heat Treatment Temperature | Heat Treatment Time | Average Crystallite Size |
|---|---|---|---|---|
| Catalyst A1 | 10% H₂+90% N₂ | 200°C | 2 h | 2.0 nm |
| Catalyst A2 | 10% H₂+90% N₂ | 400°C | 2 h | 2.5 nm |
| Catalyst A3 | 10% H₂+90% N₂ | 600°C | 2 h | 4.8 nm |
| Catalyst A4 | 10% H₂+90% N₂ | 800°C | 2 h | 14.5 nm |
| Catalyst B1 | 20% O₂+80% N₂ | 100°C | 1 h | - |
| Catalyst B2 | 20% O₂+80% N₂ | 200°C | 1 h | 4.9 nm |
| Catalyst B3 | 20% O₂+80% N₂ | 300°C | 1 h | 4.5 nm |
| Catalyst C1 | 10% H₂+90% N₂ | 200°C | 2 h | 2.3 nm |
| Catalyst R1 | - | - | - | 1.9 nm |
| Catalyst R2 | 10% H₂+90% N₂ | 800°C | 2 h | 18.0 nm |

### [Production of Membrane Electrode Assembly (MEA)]

Using the catalysts obtained above and the catalysts for comparison, membrane electrode assemblies (MEA) for cell evaluation were produced. The detailed production procedure of the membrane electrode assembly is described below.

### (Anode)

A different anode-side carbon-supported catalyst was employed for each of Comparative Examples and Examples. In Comparative Examples 1, 2 and 5, a 50% platinum-supporting carbon TEC 10E50E (produced by Tanaka Kikinzoku Kogyo K.K., Catalyst P) was employed. In Comparative Example 3, 40% iridium-supporting carbon HP Iridium on VulcanXC72 using Vulcan XC72 as the support (produced by BASF Fuel Cell, Inc., Catalyst R1) was employed. In Comparative Example 4, Catalyst B3 was employed. In Examples 1 to 9, Catalysts A1 to A4, B1, B2, C1 and R2 were employed.

Each carbon-supported catalyst was mixed with alcohol to have a solid content concentration of 9 wt%. Each mixed solution was added to an ion exchange resin solution (a perfluorosulfonic acid electrolyte solution (SE20142), produced by DuPont) so that the mass ratio of the ion exchange resin solution to the support carbon became 1.0. Ultrasonic waves were irradiated on the thus-prepared liquid to disperse the catalyst-supporting carbon, whereby a coating solution was produced.

The obtained coating solutions each was coated on a 200 µm-thick PTFE sheet to give a predetermined noble metal loading shown in Table 2 and dried to form an anode electrode layer.

The anode designation, the kind of anode catalyst, and the catalyst metal loading in each of Comparative Examples and Examples are shown in Table 2.

### (Cathode)

In Comparative Examples 1 to 4 and Examples 1 to 8, PRIMEA (registered trademark) #5580 (Pt loading: 0.4 mg/cm², produced by Japan Gore-Tex Inc.) was employed for the cathode.

In Comparative Example 5 and Example 9, PRIMEA (registered trademark) #5580 (Pt loading: 0.2 mg/cm², produced by Japan Gore-Tex Inc.) was employed for the cathode. PRIMEA (registered trademark) #5580 has a specification of high specific surface area carbon and therefore, even when the Pt loading is reduced to 0.2 mg/cm², sufficiently high initial characteristics are obtained.

### (Membrane Electrode Assembly)

In all of Comparative Examples and Examples, GORE-SELECT (registered trademark) 20K (produced by Japan Gore-Tex Inc.) was employed for the electrolyte membrane. An electrolyte membrane having a size of 15x15 cm and a thickness of 20 µm was prepared. From the above-described anodes, cathodes and electrolyte membrane, membrane electrode assemblies (MEA) were produced by a decal method after performing hot pressing.

Table 2

**Table 2: Details of MEA**

| Test Sample | Anode | Anode Catalyst | Metal Loading, mg/cm² |
|---|---|---|---|
| Comparative Example 1 | Electrode P1 | Catalyst P | 0.10 |
| Comparative Example 2 | Electrode P2 | Catalyst P | 0.05 |
| Comparative Example 3 | Electrode R1 | Catalyst R1 | 0.05 |
| Comparative Example 4 | Electrode B3 | Catalyst B3 | 0.05 |
| Comparative Example 5 | Electrode P1 | Catalyst P | 0.10 |
| Example 1 | Electrode A1 | Catalyst A1 | 0.05 |
| Example 2 | Electrode A2 | Catalyst A2 | 0.05 |
| Example 3 | Electrode A3 | Catalyst A3 | 0.05 |
| Example 4 | Electrode A4 | Catalyst A4 | 0.05 |
| Example 5 | Electrode B1 | Catalyst B1 | 0.05 |
| Example 6 | Electrode B2 | Catalyst B2 | 0.05 |
| Example 7 | Electrode R2 | Catalyst R2 | 0.05 |
| Example 8 | Electrode C1 | Catalyst C1 | 0.05 |
| Example 9 | Electrode A1 | Catalyst A1 | 0.05 |

### [Evaluation Test of Initial Cell Characteristics]

Each membrane electrode assembly was disposed between two sheets of water-repellent carbon paper (CARBEL (registered trademark), CNW10A, produced by Japan Gore-Tex Inc.) and incorporated into a power generation cell, and an initial power generation test at a cell temperature of 80°C and a current density of 0.2 A/cm², 0.5 A/cm² or 1.0 A/cm² was performed by supplying hydrogen (availability: 80%) and air (availability: 40%) to the anode side and the cathode side, respectively, under atmospheric pressure. As for the gas dew point, a gas having a dew point of 80°C was supplied to both the anode and the cathode in the test under a high humidification condition, and a gas having a dew point of 55°C was supplied to both the anode and the cathode in the test under a low humidification condition. In the case of a low humidification condition, a back pressure of 50 kPa was applied. The voltage values obtained are shown in Tables 3 and 4. It was confirmed from these results that the fuel cell using the anode-side catalyst composition of the present invention is practicable under both a high humidification condition and a low humidification condition.

Table 3

**Table 3: Initial Voltage Characteristics Under High Humidification Condition**

| Test Sample | 0.2 A/cm² | 0.5 A/cm² | 1.0 A/cm² |
|---|---|---|---|
| Comparative Example 1 | 0.782 V | 0.719 V | 0.614 V |
| Comparative Example 2 | 0.780 V | 0.716 V | 0.613 V |
| Comparative Example 3 | 0.778 V | 0.713 V | 0.602 V |
| Comparative Example 4 | power generation failure | power generation failure | power generation failure |
| Example 1 | 0.782 V | 0.719 V | 0.608 V |
| Example 2 | 0.781 V | 0.717 V | 0.608 V |
| Example 3 | 0.783 V | 0.719 V | 0.609 V |
| Example 4 | 0.780 V | 0.713 V | 0.592 V |
| Example 5 | 0.778 V | 0.708 V | 0.579 V |
| Example 6 | 0.779 V | 0.713 V | 0.592 V |
| Example 7 | 0.773 V | 0.703 V | 0.579 V |
| Example 8 | 0.782 V | 0.719 V | 0.607 V |

Table 4

**Table 4: Initial Voltage Characteristics Under Low Humidification Condition**

| Test Sample | 0.2 A/cm² | 0.5 A/cm² | 1.0 A/cm² |
|---|---|---|---|
| Comparative Example 1 | 0.788 V | 0.718 V | 0.619 V |
| Comparative Example 2 | 0.785 V | 0.713 V | 0.611 V |
| Comparative Example 3 | 0.787 V | 0.718 V | 0.621 V |
| Comparative Example 4 | power generation failure | power generation failure | power generation failure |
| Example 1 | 0.792 V | 0.722 V | 0.623 V |
| Example 2 | 0.789 V | 0.717 V | 0.618 V |
| Example 3 | 0.790 V | 0.719 V | 0.621 V |
| Example 4 | 0.789 V | 0.718 V | 0.618 V |
| Example 5 | 0.785 V | 0.709 V | 0.600 V |
| Example 6 | 0.788 V | 0.715 V | 0.612 V |
| Example 7 | 0.783 V | 0.712 V | 0.612 V |
| Example 8 | 0.791 V | 0.722 V | 0.615 V |

### [Evaluation Test of Hydrogen Adsorption Electric Quantity]

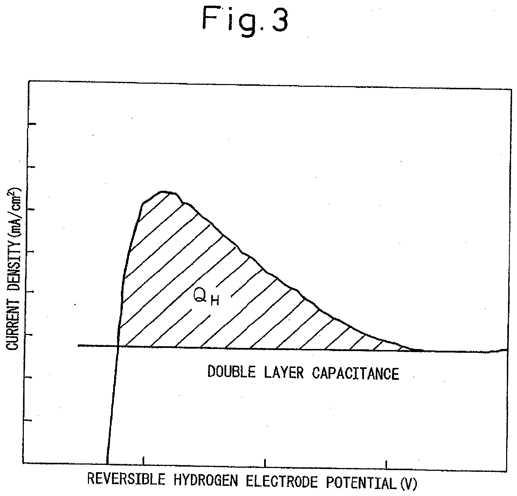

Based on the above-described XRD analysis, the catalyst composition of the present invention was found to have an average crystallite size of 2.0 to 20 nm. In addition, for the purpose of confirming the presence of a fine particle smaller than 2.0 nm of the anode catalyst, the following electrochemical evaluation was performed. A nitrogen gas having a dew point of 80°C was supplied to the anode, and a hydrogen gas having a dew point of 80°C was supplied to the cathode. After the voltage was stabilized, cyclic voltammetry was performed with a potentiostat and a working electrode assigned to the anode under the condition of an upper limit potential of 1.2 V, a lower limit potential of 0.05 V and a scan speed of 100 mV/s, and date in the third cycle were used. The electric charge quantity in the hydrogen adsorption region was determined from Q_{H} (hydrogen adsorption electric quantity) in the shaded portion of Fig. 3, and the maximum value of the x-axis was assigned to the value when the gradient becomes 0 in the vicinity of 0.35 V. The double layer capacitance portion was excluded. The obtained electric charge quantity was divided by the mass of anode metal to determine the value of electric charge quantity per mass of the metal. The values obtained are shown in Table 5. The electric charge quantity per mass of the metal is considered to basically correlate with the average crystallite size of the catalyst particle. More specifically, it is believed that as the average crystallite size is smaller, the catalyst surface area becomes larger and the electric charge quantity per mass of the metal increases. Compared with the average crystallite size based on XRD, when the average crystallite size of the catalyst composition is from 2 to 20 nm, the electric charge quantity (Q_{H}) in the hydrogen adsorption region per unit mass of the metal corresponds to the range of 15.0 to 65.0 C/mg (metal).

Table 5

**Table 5: Electric Charge Quantity (Q_{H}) in Hydrogen Adsorption Region per Metal Loading of Anode Catalyst**

| Test Sample | Q_{H}/Metal Loading | Catalyst Fine Particle Size, nm (based on XRD analysis) |
|---|---|---|
| Comparative Example 1 | 77.7 C/mg (metal) | - |
| Comparative Example 2 | 68.9 C/mg (metal) | - |
| Comparative Example 3 | 69.4 C/mg (metal) | 1.9 |
| Comparative Example 4 | 14.7 C/mg (metal) | 4.5 |
| Example 1 | 54.9 C/mg (metal) | 2.0 |
| Example 2 | 53.1 C/mg (metal) | 2.5 |
| Example 3 | 34.7 C/mg (metal) | 4.8 |
| Example 4 | 33.8 C/mg (metal) | 14.5 |
| Example 5 | 23.9 C/mg (metal) | - |
| Example 6 | 20.6 C/mg (metal) | 4.9 |
| Example 7 | 30.5 C/mg (metal) | 18.0 |

### [Evaluation Test of Oxygen Reduction Characteristics of Anode]

Each membrane electrode assembly was disposed between two sheets of water-repellent carbon paper (CARBEL (registered trademark), CNW10A, produced by Japan Gore-Tex Inc.) and incorporated into a power generation cell, and an initial power generation test at a cell temperature of 80°C and a current density of 0.1 A/cm² was performed by supplying hydrogen (availability: 80%) and oxygen (availability: 40%) to the cathode side and the anode side, respectively, under atmospheric pressure. As for the gas dew point, a gas having a dew point of 80°C was supplied to both the anode and the cathode. The obtained voltage values after resistance correction are shown in Table 6. It is seen from these results that the iridium-based catalyst of the present invention (Examples 1 to 7) has an oxygen reduction ability similarly to a platinum-based catalyst (Comparative Examples 1 and 2) but the obtained voltage value is lower than that when using a platinum-based catalyst. That is, the iridium-based catalyst has a lower oxygen reduction ability than platinum and thanks to this ability, deterioration at the start/stop time is suppressed.

Table 6

**Table 6: Voltage (iR Correction) Characteristics in Evaluation of Oxygen Reduction Characteristics of Anode**

| Test Sample | 0.1 A/cm² |
|---|---|
| Comparative Example 1 | 0.811 V |
| Comparative Example 2 | 0.762 V |
| Comparative Example 3 | 0.566 V |
| Comparative Example 4 | 0.190 V |
| Example 1 | 0.587 V |
| Example 2 | 0.598 V |
| Example 3 | 0.550 V |
| Example 4 | 0.535 V |
| Example 5 | 0.477 V |
| Example 6 | 0.446 V |
| Example 7 | 0.493 V |

### [Evaluation Test of Durable Cell Characteristics in Start/Stop Condition]

Each membrane electrode assembly was disposed between two sheets of water-repellent carbon paper (CARBEL (registered trademark), CNW20B, produced by Japan Gore-Tex Inc.) and incorporated into a power generation cell, and a start/stop power generation test was performed at a cell temperature of 80°C by supplying hydrogen (availability: 83%) and air (availability: 50%) to the anode side and the cathode side, respectively, under atmospheric pressure. As for the gas dew point, a gas having a dew point of 70°C was supplied to both the anode and the cathode. The procedure of start/stop evaluation is described below. A normal evaluation of initial power generation characteristics was performed at a current density of 0.3 A/cm², 0.8 A/cm² and 1.4 A/cm² to obtain an initial power generation voltage and after forcibly stopping the power generation by supplying air to the anode side, hydrogen was again supplied to perform power generation (start-up). An accelerated test of simulating a start/stop operation was performed by repeating the above-described start/stop cycle 1,000 times. Thereafter, a normal evaluation of power generation characteristics was performed at a current density of 0.3 A/cm², 0.8 A/cm² and 1.4 A/cm² to obtain a power generation voltage after test. A voltage deterioration ratio was determined from the difference between the voltage after test obtained and the initial voltage, and the results are shown in Table 7. It was confirmed from these results that the fuel cell using the anode-side catalyst composition of the present invention can generate power even after performing a start/stop cycle 1,000 times and exhibits high durability. It was confirmed from these results that despite a cathode platinum loading of 0.2 mg/cm² or less (Example 9), the fuel cell using the anode-side catalyst composition of the present invention can still generate sufficient power even after performing a start/stop cycle 1,000 times and at the same time, exhibits high durability. These results suggest the possibility of cost reduction by the reduction in the cathode loading.

Table 7

**Table 7: Voltage Deterioration Ratio Characteristics in Start/Stop Test**

| Test Sample | 0.3 A/cm² | 0.8 A/cm² | 1.4 A/cm² |
|---|---|---|---|
| Comparative Example 1 | 343 µV/cycle | power generation failure after test | power generation failure after test |
| Comparative Example 2 | 146 µV/cycle | power generation failure after test | power generation failure after test |
| Comparative Example 3 | 44 µV/cycle | 85 µV/cycle | 303 µV/cycle |
| Comparative Example 4 | power generation failure | power generation failure | power generation failure |
| Comparative Example 5 | power generation failure after test | power generation failure after test | power generation failure after test |
| Example 1 | 27 µV/cycle | 52 µV/cycle | 166 µV/cycle |
| Example 2 | 28 µV/cycle | 48 µV/cycle | 156 µV/cycle |
| Example 3 | 29 µV/cycle | 48 µV/cycle | 159 µV/cycle |
| Example 4 | 27 µV/cycle | 39 µV/cycle | 98 µV/cycle |
| Example 5 | 20 µV/cycle | 45 µV/cycle | 231 µV/cycle |
| Example 6 | 24 µV/cycle | 38 µV/cycle | 99 µV/cycle |
| Example 7 | 34 µV/cycle | 56 µV/cycle | 137 µV/cycle |
| Example 8 | 29 µV/cycle | 49 µV/cycle | 144 µV/cycle |
| Example 9 | 45 µV/cycle | 76 µV/cycle | 225 µV/cycle |

Also, for the purpose of confirming the elution of noble metal in the anode by the start/stop test, the following electrochemical evaluation was performed. A hydrogen gas having a dew point of 80°C was supplied to the anode, and a nitrogen gas having a dew point of 80°C was supplied to the cathode. After the voltage was stabilized, cyclic voltammetry was performed with a potentiostat and a working electrode assigned to the cathode under the condition of an upper limit potential of 1.2 V, a lower limit potential of 0.05 V and a scan speed of 100 mV/s, and a double layer capacitance of the cathode was estimated from the current value at 0.40 V in the third cycle. This evaluation was performed before and after the start/stop test. Since the double layer capacitance of the cathode increases when elution of the anode noble metal is generated, the degree of noble metal elution was evaluated based on the increase in the capacitance. The degree of noble metal elution was determined from the change in the double layer capacitance between before and after the test, and the results are shown in Table 8. In Comparative Example 3, the change ratio was 102%, suggesting large elution, except for Comparative Example 3, the change ratio measured was basically in the range of ±30%. The particle size based on the XRD analysis of Comparative Example 3 was 1.9 nm and it is considered that when the average particle size is less 2 nm, elution of the metal contained in the catalyst particle is accelerated. Also, it was revealed that the elution ratio was basically smaller in the catalyst heat-treated in an oxidizing atmosphere (Examples 5 and 6) than in the catalyst heat-treated in a reducing atmosphere (Examples 1 to 4 and 7).

Table 8

**Table 8: Change in Double Layer Capacitance of Cathode Between Before and After Start/Stop Test**

| Test Sample | Before Test | After Test | Change Ratio |
|---|---|---|---|
| Comparative Example 1 | 59.2 mF/cm² | 39.4 mF/cm² | -33% |
| Comparative Example 2 | 57.2 mF/cm² | 41.7 mF/cm² | -27% |
| Comparative Example 3 | 59.8 mF/cm² | 120.9 mF/cm² | 102% |
| Comparative Example 4 | 58.4 mF/cm² | 54.8 mF/cm² | -9% |
| Example 1 | 56.9 mF/cm² | 63.5 mF/cm² | 11% |
| Example 2 | 58.5 mF/cm² | 68.9 mF/cm² | 17% |
| Example 3 | 56.9 mF/cm² | 68.5 mF/cm² | 20% |
| Example 4 | 58.4 mF/cm² | 76.2 mF/cm² | 30% |
| Example 5 | 58.5 mF/cm² | 54.5 mF/cm² | -7% |
| Example 6 | 58.1 mF/cm² | 67.4 mF/cm² | 16% |
| Example 7 | 58.5 mF/cm² | 74.3 mF/cm² | 27% |

### [Evaluation Test of Durable Cell Characteristics in Hydrogen-Deficient Condition (Polarity Inversion)]

Each membrane electrode assembly was disposed between two sheets of water-repellent carbon paper (CARBEL (registered trademark), CNW10A, produced by Japan Gore-Tex Inc.) and incorporated into a power generation cell, and hydrogen (availability: 67%) and air (availability: 50%) were supplied to the anode side and the cathode side, respectively, under atmospheric pressure. As for the gas dew point, a gas having a dew point of 70°C was supplied to both the anode and the cathode. A power generation test was performed at a cell temperature of 70°C to obtain an initial power generation voltage at a current density of 0.2 A/cm², 0.5 A/cm² and 1.0 A/cm². For the hydrogen deficiency evaluation, nitrogen was supplied to the anode side and the anode gas was thereby exchanged to nitrogen from hydrogen. By taking as one cycle a procedure of applying, in this state, a current to the anode side for 30 seconds/holding an open circuit operation for 30 seconds at a current density of 0.2 A/cm², an accelerated test of simulating a hydrogen-deficient operation (polarity inversion) was performed by repeating 90 cycles. Thereafter, a normal evaluation of power generation characteristics was performed to obtain a power generation voltage after test at a current density of 0.2 A/cm² and 0.5 A/cm². A voltage deterioration ratio was determined from the difference between the power generation voltage after test obtained and the initial power generation voltage, and the results are shown in Table 9. It was confirmed from these results that the fuel cell using the anode-side catalyst composition of the present invention can generate power even after experiencing 90 cycles of hydrogen-deficient operation (polarity inversion) simulation. In Examples 1 and 8, a test by repeating 180 cycles was also performed.

Table 9

**Table 9: Voltage Deterioration Ratio Characteristics in Hydrogen-Deficient (Polarity Inversion) Test**

| Test Sample | 0.2 A/cm² | 0.5 A/cm² |
|---|---|---|
| Comparative Example 1 | power generation failure after test | power generation failure after test |
| Comparative Example 2 | power generation failure after test | power generation failure after test |
| Comparative Example 3 | 83 µV/cycle | 73 µV/cycle |
| Comparative Example 4 | power generation failure | power generation failure |
| Example 1 | 39 µV/cycle | 74 µV/cycle |
| Example 2 | 84 µV/cycle | 113 µV/cycle |
| Example 3 | 143 µV/cycle | 258 µV/cycle |
| Example 4 | 228 µV/cycle | 396 µV/cycle |
| Example 5 | 152 µV/cycle | 188 µV/cycle |
| Example 6 | 359 µV/cycle | 693 µV/cycle |
| Example 7 | 50 µV/cycle | 53 µV/cycle |
| Example 8 | 34 µV/cycle | 40 µV/cycle |

Also, the cell voltage in each cycle (1, 30 or 60 cycles) of the hydrogen-deficient test was measured as an index for judging the water electrolysis overvoltage of the anode. In Examples 1 to 8, the cell voltage after 180 cycles was also measured. The results are shown in Table 10. In Comparative Examples 1 and 2 using a platinum-based catalyst for the anode, the cell voltage was greatly changed, and when the iridium-based catalyst of the present invention was used, the cell voltage was scarcely changed. This is considered to result because due to lower water electrolysis overvoltage of the iridium-based catalyst than that of platinum, water electrolysis was likely to occur and in turn, corrosion of the fuel electrode carbon was suppressed. Furthermore, it was confirmed that in the case of using graphitized carbon black (Example 8), higher resistance to hydrogen deficiency (polarity inversion) is obtained.

Table 10

**Table 10: Voltage Characteristics in Hydrogen-Deficient (Polarity Inversion) Test**

| Test Sample | 1 Cycle (after 5 seconds) | 30 Cycles | 60 Cycles | 180 Cycles |
|---|---|---|---|---|
| Comparative Example 1 | -0.99 V | -24 V | -25 V | - |
| Comparative Example 2 | -0.99 V | -24 V | -25 V | - |
| Comparative Example 3 | -0.71 V | -0.74 V | -0.76 V | - |
| Comparative Example 4 | power generation failure | power generation failure | power generation failure | - |
| Example 1 | -0.71 V | -0.73 V | -0.74 V | -25 V |
| Example 2 | -0.72 V | -0.70 V | -0.74 V | - |
| Example 3 | -0.72 V | -0.73 V | -0.75 V | - |
| Example 4 | -0.73 V | -0.74 V | -0.76 V | - |
| Example 5 | -0.74 V | -0.73 V | -0.83 V | - |
| Example 6 | -0.73 V | -0.76 V | -0.77 V | - |
| Example 7 | -0.75 V | -0.76 V | -0.77 V | - |
| Example 8 | -0.69 V | -0.72 V | -0.73 V | -0.75 V |

### [Measurement of Ir4f Peak by X-Ray Photoelectron Spectrometry]

The Ir4f peak of various catalysts prepared was measured using an X-ray photoelectron spectrometer (XPS). The measurement was performed at a tube voltage of 10 kV and a tube current of 20 mA by using an MgKα line for the radiation source. According to the results thereof, the position of the Ir4f peak top varies depending on the catalyst, and the Ir4f7/2 peak appeared in the range of 60.8 to 61.5 eV. The results are shown in Table 11. As the oxidation number of Ir is larger, the peak is shifted to a higher energy side, and the peak of iridium oxide appears on the higher energy side by 0.5 to 1.5 eV than the peak of metal iridium. With respect to the values of Catalysts B1 and B3 which were subjected to an oxidation treatment, the Ir4f peak appeared on the high energy side as compared with Catalyst A4 which was not subjected to an oxidation treatment, and as the oxygen treatment temperature was higher, the shift amount was larger, implying that oxidation of the Ir particle more proceeded. From these results, an Ir particle having an oxidation state with the Ir4f7/2 peak being included between 60.8 and 61.4 (eV) is considered to be optimal. However, in the case where the metal has a fine particle size of about a few nanometers, the electron state of a particle is known to be different from the electron state of a bulk. It is reported that as a metal particle is smaller, the peak of XPS shifts by a few eV to the higher energy side due to the difference above (References 1, 2 and 3). Also in the Ir catalyst for use in the present invention, when the Ir particle size is small, the peak of XPS is considered to shift to the higher energy side by the particle size effect in addition to the shift by the oxidation of Ir.
Reference 1: Y. Takasu et al., Chem. Phys. Lett., 108, 384 (1984)
Reference 2: Y. Takasu et al., Electrochim. Acta., 41, 2595 (1996)
Reference 3: A. Fritsch et al., Surface Science, 145, L517 (1984)

Table 11

**Table 11: XPS Spectrum of Catalyst**

| Catalyst Name | Peak Position Ir4f7/2 (eV) |
|---|---|
| Catalyst A4 (Catalyst for Example 4) | 60.9 |
| Catalyst B1 (Catalyst for Example 5) | 61.3 |
| Catalyst B3 (Catalyst for Comparative Example 4) | 61.5 |
| Catalyst R1 (Catalyst for Comparative Example 3) | 60.9 |
| Catalyst R2 (Catalyst for Example 7) | 60.8 |

## Claims

1. An anode-side catalyst composition for a fuel cell, comprising a catalyst obtained by supporting a catalyst particle on an electrically conductive material and an ion exchange resin, wherein said catalyst particle is composed of a metal or a partial metal oxide, said metal being selected from the group consisting of iridium, ruthenium, rhenium, palladium and rhodium,
said catalyst particle containing said metal or partial metal oxide having an average crystallite size of from 2 to 20 nm.

2. The catalyst composition as claimed in any one of claims 1 to 3, wherein the electric charge quantity (Q_{H}) in the hydrogen absorption region per unit mass of said metal is from 15.0 to 65.0 C/mg (metal).

3. The catalyst composition as claimed in any one of claims 1 to 2, wherein, in said partial metal oxide, the mass ratio of the metal: metal oxide is 1:10 to 10:1.

4. The catalyst composition as claimed in any one of claims 1 to 3, wherein the peak at Ir4f7/2 in the X-ray photoelectron spectrometer (XPS) spectrum of said catalyst particle is included between 60.8 and 61.4 (eV).

5. The catalyst composition as claimed in any one of claims 1 to 4, wherein said electrically conductive material is carbon black with high graphitization degree having a BET specific surface area of 50 to 300 m²/g.

6. A membrane electrode assembly (MEA) for a polymer electrolyte fuel cell, comprising:
an anode catalyst layer on one surface of a polymer electrolyte membrane, and
a cathode catalyst layer on the opposite surface, wherein said anode catalyst layer contains the catalyst composition claimed in any one of claims 1 to 5.

7. The MEA as claimed in claim 6, wherein the Pt supported amount in the cathode is 0.2 mg/cm² or less than 0.2 mg/cm².

## Patentansprüche

1. Anodenseitige Katalysatorzusammensetzung für eine Brennstoffzelle, aufweisend einen Katalysator, der erhalten wurde durch Trägern eines Katalysatorpartikels auf einem elektrisch leitfähigen Material und einem Ionenaustauscherharz, wobei das Katalysatorpartikel zusammengesetzt ist aus einem Metall oder einem Metall-Teiloxid, wobei das Metall ausgewählt ist aus der Gruppe, die aus Iridium, Ruthenium, Rhenium, Palladium und Rhodium besteht,
wobei das Katalysatorpartikel das Metall oder Metall-Teiloxid mit einer mittleren Kristallitgröße von 2 bis 20 nm enthält.

2. Katalysatorzusammensetzung wie in einem der Ansprüche 1 bis 3 beansprucht, wobei die elektrische Ladungsmenge (Q_{H}) in dem Wasserstoff-Adsorptionsbereich pro Masseneinheit des Metalls von 15,0 bis 65,0 C/mg (Metall) beträgt.

3. Katalysatorzusammensetzung wie in einem der Ansprüche 1 bis 2 beansprucht, wobei in dem Metall-Teiloxid das Massenverhältnis von Metall : Metalloxid 1:10 bis 10:1 beträgt.

4. Katalysatorzusammensetzung wie in einem der Ansprüche 1 bis 3 beansprucht, wobei der Peak bei Ir4f7/2 in dem röntgenstrahlangeregten Photoelektronenspektrometer (XPS)-Spektrum des Katalysatorpartikels zwischen 60,8 und 61,4 (eV) liegt.

5. Katalysatorzusammensetzung wie in einem der Ansprüche 1 bis 4 beansprucht, wobei das elektrisch leitfähige Material Ruß mit einem hohen Graphitisierungsgrad mit einer spezifischen BET-Oberflächenfläche von 50 bis 300 m²/g ist.

6. Membranelektrodenanordnung (MEA) für eine Polymerelektrolyt-Brennstoffzelle, aufweisend:
eine Anodenkatalysatorschicht an einer Oberfläche einer Polymerelektrolytmembran, und
eine Kathodenkatalysatorschicht an der entgegengesetzten Oberfläche, wobei die Anodenkatalysatorschicht die in einem der Ansprüche 1 bis 5 beanspruchte Katalysatorzusammensetzung enthält.

7. MEA wie in Anspruch 6 beansprucht, wobei die geträgerte Menge an Pt in der Kathode 0,2 mg/cm² oder weniger als 0,2 mg/cm² beträgt.

## Revendications

1. Composition catalytique côté anode destinée à une pile à combustible, comprenant un catalyseur obtenu en supportant une particule catalytique sur un matériau conducteur de l'électricité et une résine échangeuse d'ions, dans lequel ladite particule catalytique est composée d'un métal ou d'un oxyde de métal partiel, ledit métal étant sélectionné parmi le groupe consistant en de l'iridium, du ruthénium, du rhénium, du palladium et du rhodium,
ladite particule catalytique contenant ledit métal ou oxyde de métal partiel présentant une taille de cristallite moyenne allant de 2 à 20 nm.

2. Composition catalytique selon l'une quelconque des revendications 1 à 3, dans laquelle la quantité de charge électrique (Q_{E}) dans la région d'adsorption d'hydrogène par unité de masse dudit métal est comprise dans un intervalle de 15,0 à 65,0 C/mg (métal).

3. Composition catalytique selon la revendication 1 ou 2, dans laquelle dans l'oxyde de métal partiel, le rapport de masse entre métal : oxyde de métal est de 1 : 10 à 10 : 1.

4. Composition catalytique selon l'une quelconque des revendications 1 à 3, dans laquelle la crête en Ir4f7/2 dans le spectre de spectrométrie photoélectronique aux rayons X (XPS) de ladite particule catalytique est comprise entre 60,8 et 61,4 (eV).

5. Composition catalytique selon l'une quelconque des revendications 1 à 4, dans laquelle ledit matériau conducteur de l'électricité est du noir de carbone avec un degré élevé de graphitisation présentant une aire spécifique BET allant de 50 à 300 m²/g.

6. Assemblage membrane-électrodes (MEA) pour une pile à combustible électrolytique polymère, comprenant :
une couche catalytique anodique sur une surface d'une membrane électrolytique polymère, et
une couche catalytique cathodique sur la surface opposée, dans lequel ladite couche catalytique anodique contient la composition catalytique selon l'une quelconque des revendications 1 à 5.

7. MEA selon la revendication 6, dans lequel la quantité de Pt supportée dans la cathode est inférieure ou égale à 0,2 mg/cm².
